# EUROPEAN PATENT APPLICATION

(11) **EP 4 306 993 A1**
(43) Date of publication of application: **17.01.2024**
(21) Application number: 22767129.4
(22) Date of filing: 08.03.2022
(51) Int. Cl.: G01S 7/481, G01S 7/484

(54) **SENSOR DEVICE, CONTROL DEVICE, CONTROL METHOD, PROGRAM, AND STORAGE MEDIUM**

(30) Priority: 10.03.2021 JP 2021038057
(71) Applicant: Pioneer Corporation, Tokyo 113-0021 (JP); Pioneer Smart Sensing Innovations Corporation, Tokyo 113-0021 (JP)
(72) Inventor: NAGATA Hiroshi, Kawagoe-shi, Saitama 350-8555 (JP); IZUTA Ryo, Kawagoe-shi, Saitama 350-8555 (JP)
(74) Representative: Vossius & Partner Patentanwälte Rechtsanwälte mbB
(86) International application number: PCT/JP2022/009949
(87) International publication number: WO 2022/191175

(57) **Abstract**

A control unit (200) determines whether or not a plurality of spots to be emitted by a scanning unit (100) satisfy a predetermined condition. The control unit (200) controls a density distribution of the plurality of spots to be emitted by the scanning unit (100) until the plurality of spots to be emitted by the scanning unit (100) satisfy the predetermined condition.

## Description

### TECHNICAL FIELD

The present invention relates to a sensor device, a control device, a control method, a program, and a storage medium.

### BACKGROUND ART

In recent years, various sensor devices such as light detection and ranging (LiDAR) have been developed. The sensor device includes a scanning unit such as a micro electro mechanical systems (MEMS) mirror. The scanning unit reflects a plurality of beams repeatedly emitted from a light source such as a pulsed laser to irradiate the inside of a field of view (FOV) with a plurality of spots. The sensor device detects reflected beams from the plurality of spots with a light detection element such as an avalanche photodiode (APD). The sensor device generates a point cloud using a detection result of the light detection element, and detects, recognizes, or identifies an object irradiated with the plurality of spots.

Patent Document 1 describes an example of the sensor device. The sensor device includes a first LiDAR and a second LiDAR. The first LiDAR irradiates the inside of the FOV spatially uniformly with a plurality of beams. The second LiDAR irradiates the inside of the FOV spatially non-uniformly with a plurality of beams.

### RELATED DOCUMENT

### PATENT DOCUMENT

[Patent Document 1] PCT Japanese Translation Patent Publication No. 2019-526056

### SUMMARY OF THE INVENTION

### TECHNICAL PROBLEM

By controlling the density distribution of the plurality of spots to be emitted to an object to increase the density of the plurality of spots, the object may be detected, recognized, or identified with a relatively high resolution. However, simply increasing the density of the plurality of spots may lead to the reduction in the FOV, which may result in an inappropriate density distribution of the plurality of spots, such as an excessively narrow detection range of the object or an excessively high density of the plurality of spots.

An example of the problem to be solved by the present invention is to control the density distribution of a plurality of spots to an appropriate distribution.

### SOLUTION TO PROBLEM

According to the invention described in claim 1,
there is provided a sensor device including:
a scanning unit; and
a control unit configured to control a density distribution of a plurality of spots to be emitted by the scanning unit until the plurality of spots to be emitted by the scanning unit satisfy a first predetermined condition.

According to the invention described in claim 15,
there is provided a control device including:
a control unit configured to control a density distribution of a plurality of spots to be emitted by a scanning unit until the plurality of spots to be emitted by the scanning unit satisfy a first predetermined condition.

According to the invention described in claim 16,
there is provided a control method including:
causing a computer to control a density distribution of a plurality of spots to be emitted by a scanning unit until the plurality of spots to be emitted by the scanning unit satisfy a first predetermined condition.

According to the invention described in claim 17,
there is provided a program causing a computer to have:
a function of controlling a density distribution of a plurality of spots to be emitted through scanning by a scanning unit until the plurality of spots to be emitted by the scanning unit satisfy a first predetermined condition.

According to the invention described in claim 18,
there is provided a storage medium storing the program.

### BRIEF DESCRIPTION OF THE DRAWINGS

Fig. 1 is a diagram showing a sensor device according to an embodiment.
Fig. 2 is a flowchart showing an example of control of a control unit according to the embodiment.
Fig. 3 is a diagram illustrating a hardware configuration of the control unit.
Fig. 4 is a diagram showing a sensor device according to a modification example.
Fig. 5 is a flowchart showing a first example of control of the control unit according to an example.
Fig. 6 is a diagram illustrating an example of the control shown in Fig. 5.
Fig. 7 is a diagram illustrating an example of the control shown in Fig. 5.
Fig. 8 is a flowchart showing a second example of the control of the control unit according to the example.
Fig. 9 is a flowchart showing a third example of the control of the control unit according to the example.
Fig. 10 is a graph illustrating an example of a first drive signal and a second drive signal for performing scanning in a second direction with a beam emitted from a light source.
Fig. 11 is a diagram showing an example of a plurality of spots in a case where the scanning unit is driven using the first drive signal shown in Fig. 10.
Fig. 12 is a diagram showing an example of a plurality of spots in a case where the scanning unit is driven using the second drive signal shown in Fig. 10.

### DESCRIPTION OF EMBODIMENTS

Hereinafter, embodiments, modification examples, and examples of the present invention will be described with reference to the drawings. In all the drawings, the same constituent elements are designated by the same reference numerals, and the description thereof will not be repeated as appropriate.

In the present specification, unless otherwise specified, ordinal numbers such as "first", "second", "third", and the like are added merely to distinguish configurations with similar names and do not imply specific characteristics of the configuration (for example, order or importance).

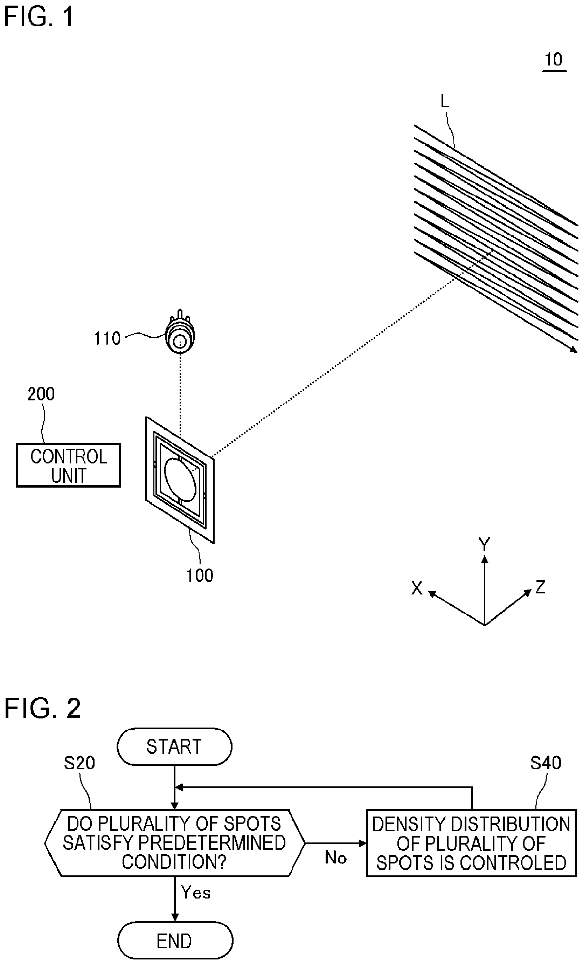

Fig. 1 is a diagram showing a sensor device 10 according to an embodiment.

In Fig. 1, an arrow indicating a first direction X, a second direction Y, or a third direction Z indicates that a direction from a base to a tip of the arrow is a positive direction of a direction indicated by the arrow, and a direction from the tip to the base of the arrow is a negative direction of the direction indicated by the arrow.

The first direction X is one direction parallel to a horizontal direction orthogonal to a vertical direction. When viewed from the negative direction of the third direction Z, the positive direction of the first direction X is a direction from right to left in the horizontal direction, and the negative direction of the first direction X is a direction from left to right in the horizontal direction. The second direction Y is a direction parallel to the vertical direction. The positive direction of the second direction Y is a direction from bottom to top in the vertical direction, and the negative direction of the second direction Y is a direction from top to bottom in the vertical direction. The third direction Z is one direction parallel to the horizontal direction and orthogonal to the first direction X. When viewed from the negative direction of the first direction X, the positive direction of the third direction Z is a direction from left to right in the horizontal direction, and the negative direction of the third direction Z is a direction from right to left in the horizontal direction. The relationship between the first direction X, the second direction Y, the third direction Z, the horizontal direction, and the vertical direction is not limited to the example described above. The relationship between the first direction X, the second direction Y, the third direction Z, the horizontal direction, and the vertical direction varies depending on the disposition of the sensor device 10. For example, the third direction Z may be parallel to the vertical direction.

The sensor device 10 includes a scanning unit 100, a light source 110, and a control unit 200.

In the present embodiment, the scanning unit 100 is a MEMS mirror capable of rotating or swinging around two predetermined rotation axes orthogonal to each other. Specifically, the scanning unit 100 rotates or oscillates around one of the two rotation axes to scan a virtual plane perpendicular to the third direction Z in the first direction X with a beam incident on the scanning unit 100 from the light source 110. The scanning unit 100 rotates or oscillates around the other of the two rotation axes to scan the virtual plane perpendicular to the third direction Z in the second direction Y with the beam incident on the scanning unit 100 from the light source 110. The scanning unit 100 may be a scanning unit different from the MEMS mirror, such as a polygon mirror or a galvanometer mirror.

The light source 110 is, for example, a pulsed laser. The scanning unit 100 performs scanning along a scanning line L with a plurality of beams emitted in a temporally repetitive manner from the light source 110. The scanning line L shown in Fig. 1 indicates a scanning line projected onto the virtual plane orthogonal to the third direction Z. A dashed line extending from the light source 110 through the scanning unit 100 to the scanning line L in Fig. 1 indicates a direction of a beam emitted from the light source 110 at a certain timing and reflected toward the virtual plane by the scanning unit 100. The plurality of beams emitted in a temporally repetitive manner from the light source 110 are emitted along the scanning line L by the scanning unit 100 so that a plurality of spots are emitted along the scanning line L. A field of view (FOV) of the sensor device 10 includes at least a portion of a region scanned by the scanning unit 100.

The sensor device 10 detects reflected beams from the plurality of spots with a light detection element such as an APD (not shown). The sensor device 10 generates a point cloud using a detection result of the light detection element, and detects, recognizes, or identifies an object irradiated with the plurality of spots. Hereinafter, the object detected, recognized, or identified by the sensor device 10 will be referred to as a target object, as necessary.

In an example, the sensor device 10 is a coaxial LiDAR. In this case, an optical axis of the beam emitted from the scanning unit 100 toward the plurality of spots and an optical axis of the reflected beam returning from the plurality of spots toward the sensor device 10 are located on the same axis. Alternatively, the sensor device 10 may be a biaxial LiDAR. In this case, an optical axis of the beam emitted from the scanning unit 100 toward the plurality of spots and an optical axis of the reflected beam returning from the plurality of spots toward the sensor device 10 are not located on the same axis.

Fig. 2 is a flowchart showing an example of control of the control unit 200 according to the embodiment.

The control unit 200 determines whether or not the plurality of spots to be emitted by the scanning unit 100 satisfy a predetermined condition (determination step S20). The control unit 200 controls the density distribution of the plurality of spots to be emitted by the scanning unit 100 until the plurality of spots to be emitted by the scanning unit 100 satisfy the predetermined condition (No in the determination step S20, and a control step S40). In a case where the plurality of spots to be emitted by the scanning unit 100 satisfy the predetermined condition (Yes in the determination step S20), the control unit 200 stops controlling the density distribution of the plurality of spots. As an example, the sensor device 10 then detects, recognizes, or identifies the target object using the plurality of spots of the density distribution in a state after the determination step S20 and the control step S40.

In a case where the determination step S20 and the control step S40 are performed, the target object can be detected, recognized, or identified with a higher resolution as compared with a case where the determination step S20 and the control step S40 are not performed. For example, assume that a distance from the scanning unit 100 to the target object is relatively long. The spatial interval between the plurality of beams repeatedly emitted from the light source 110 and reflected toward the target object by the scanning unit 100 widens as the plurality of beams approach the target object from the scanning unit 100. Therefore, in a case where the distance from the scanning unit 100 to the target object is relatively long and the determination step S20 and the control step S40 are not performed, the density of the plurality of spots emitted to the target object may become relatively low, and the number of the plurality of spots to be emitted to the target object may not be sufficiently high. On the other hand, in a case where the determination step S20 and the control step S40 are performed, it is possible to increase the number of the plurality of spots to be emitted to the target object by appropriately setting the predetermined condition of the determination step S20, as compared with a case where the determination step S20 and the control step S40 are not performed. In the above description, a case where the distance from the scanning unit 100 to the target object is relatively long has been described. However, in a case where the determination step S20 and the control step S40 are performed, the target object can be detected, recognized, or identified with a higher resolution as compared with a case where the determination step S20 and the control step S40 are not performed, regardless of the size of the distance from the scanning unit 100 and the target object.

The predetermined condition in the determination step S20 allows the density distribution of the plurality of spots to be an appropriate distribution, which ensures that the size of the FOV, that is, a detection range, does not become excessively small, the density of the plurality of spots does not become excessively high, or the like, even when the density of the plurality of spots to be emitted to the target object increases. Therefore, in a case where the determination step S20 and the control step S40 are performed, it is possible to control the density distribution of the plurality of spots to an appropriate distribution, which ensures that the size of the FOV does not become excessively small, the density of the plurality of spots does not become excessively high, or the like, as compared with a case where the determination step S20 and the control step S40 are not performed.

As an example, in the control step S40, the control unit 200 may control the density distribution of the plurality of spots by controlling the scanning speed of the scanning unit 100. For example, in a case where the scanning unit 100 is a MEMS mirror, the scanning speed of the scanning unit 100 is determined by the angular velocity of the MEMS mirror. For example, in a case where it is not feasible to increase the density distribution of the plurality of spots by reducing the repetition time of the beams to be repeatedly emitted from the light source 110, due to factors such as eye safety, the density distribution of the plurality of spots is controlled by controlling the scanning speed of the scanning unit 100. Specifically, in a case where the repetition time of the beams to be repeatedly emitted from the light source 110 is constant, the density of the plurality of spots when the scanning speed of the scanning unit 100 is reduced below a predetermined speed is higher than the density of the plurality of spots when the scanning speed of the scanning unit 100 is set at the predetermined speed. In a case where the repetition time of the beams to be repeatedly emitted from the light source 110 is constant, the density of the plurality of spots when the scanning speed of the scanning unit 100 is increased above the predetermined speed is lower than the density of the plurality of spots when the scanning speed of the scanning unit 100 is set at the predetermined speed. The control method of the density distribution of the plurality of spots performed by the control unit 200 is not limited to the example described above.

As an example, in the control step S40, the control unit 200 may control the density distribution of the plurality of spots by controlling the overall size of the FOV. For example, the density of the plurality of spots when the overall size of the FOV is reduced to be smaller than a predetermined size is higher than the density of the plurality of spots when the overall size of the FOV is the predetermined size. The density of the plurality of spots when the overall size of the FOV is increased to be larger than the predetermined size is lower than the density of the plurality of spots when the overall size of the FOV is the predetermined size. Alternatively, in the control step S40, the control unit 200 may make the density distribution of the plurality of spots in a portion of the FOV different from the density distribution of the plurality of spots in another portion of the FOV.

As an example, in the control step S40, a rate of density change of the plurality of spots controlled by the control unit 200 may vary depending on the directions of the plurality of spots. For example, in a case where the target object is an object having a longitudinal direction in the second direction Y rather than in the first direction X, such as a person, a very high resolution in the second direction Y may not be required. In this case, the control unit 200 increases the density increase rate of the plurality of spots in the first direction X higher than the density increase rate of the plurality of spots in the second direction Y. In this control, the control unit 200 does not need to change the density distribution of the plurality of spots in the second direction Y. Alternatively, for example, in a case where the target object is an object having a longitudinal direction in the first direction X rather than in the second direction Y, such as an automobile, a very high resolution in the first direction X may not be required. In this case, the control unit 200 increases the density increase rate of the plurality of spots in the second direction Y higher than the density increase rate of the plurality of spots in the first direction X. In this control, the control unit 200 does not need to change the density distribution of the plurality of spots in the first direction X. By appropriately varying the rate of density change of the plurality of spots controlled by the control unit 200 depending on the directions of the plurality of spots, it is possible to set the appropriate coarse and dense density level in the first direction X and the second direction Y of the plurality of spots according to the target object, and it is possible to generate a point cloud suitable for the recognition or the identification of the target object.

As an example, the control unit 200 may assign an identifier to the object detected, recognized, or identified using the point cloud generated from the plurality of spots. The object with the assigned identifier can be detected, recognized, or identified through tracking processing without the need to emit the plurality of spots with a relatively high density. Therefore, after the identifier is assigned, the control unit 200 may return the density distribution of the plurality of spots to the initial density distribution, that is, the density distribution before the control shown in Fig. 2. In this case, the control unit 200 may be able to control the density distribution of a plurality of spots to be emitted to another object different from the object with the assigned identifier.

As an example, in a case where the plurality of spots to be emitted by the scanning unit 100 do not satisfy the predetermined condition (No in the determination step S20), the control unit 200 may stop controlling the density distribution of the plurality of spots. Therefore, after the control of the density distribution of the plurality of spots is stopped, the control unit 200 may return the density distribution of the plurality of spots to the initial density distribution, that is, the density distribution before the control shown in Fig. 2. For example, when the density of at least a portion of the plurality of spots reaches a predetermined upper limit value through the control of the control unit 200, the control unit 200 stops controlling the density distribution of the plurality of spots. Alternatively, for example, when the time for the control unit 200 to perform the determination step S20 and the control step S40 reaches a predetermined upper limit time, the control unit 200 stops controlling the density distribution of the plurality of spots.

As an example, the control unit 200 may stop controlling the density distribution of the plurality of spots in a case where the target object remains stationary for a predetermined time or longer. Therefore, after the control of the density distribution of the plurality of spots is stopped, the control unit 200 may return the density distribution of the plurality of spots to the initial density distribution, that is, the density distribution before the control shown in Fig. 2. In this case, the control unit 200 can control the density distribution of a plurality of spots to be emitted to another object different from the object that has remained stationary for a predetermined time. For example, in a case where a moving automobile is intended to be the target object but the target object remains stationary for a predetermined time or longer, the control unit 200 can determine that the object irradiated with the plurality of spots is a parked or stopped automobile. Alternatively, in a case where a person is intended to be the target object but the target object remains stationary for a predetermined time or longer, the control unit 200 can determine that the object irradiated with the plurality of spots is another object that closely resembles a person.

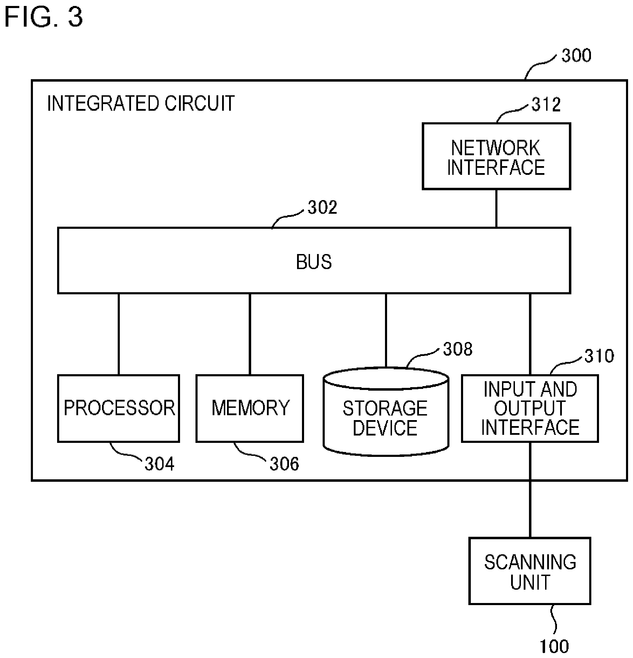

Fig. 3 is a diagram illustrating a hardware configuration of the control unit 200. The control unit 200 is implemented using an integrated circuit 300. The integrated circuit 300 is, for example, a system-on-a-chip (SoC).

The integrated circuit 300 includes a bus 302, a processor 304, a memory 306, a storage device 308, an input and output interface 310, and a network interface 312. The bus 302 is a data transmission path for the processor 304, the memory 306, the storage device 308, the input and output interface 310, and the network interface 312 to transmit and receive data to and from each other. However, a method of mutually connecting the processor 304, the memory 306, the storage device 308, the input and output interface 310, and the network interface 312 is not limited to bus connection. The processor 304 is an arithmetic processing device implemented using a microprocessor or the like. The memory 306 is a memory implemented using a random access memory (RAM) or the like. The storage device 308 is a storage device implemented using a read only memory (ROM), a flash memory, or the like.

The input and output interface 310 is an interface for connecting the integrated circuit 300 to peripheral devices. The scanning unit 100 is connected to the input and output interface 310.

The network interface 312 is an interface for connecting the integrated circuit 300 to a network. This network is a network such as a controller area network (CAN), for example. A method for the connection of the network interface 312 to the network may be a wireless connection or a wired connection.

The storage device 308 stores program modules for implementing the function of the control unit 200. The processor 304 reads out and executes these program modules on the memory 306, thereby implementing the function of the control unit 200.

The hardware configuration of the integrated circuit 300 is not limited to the configuration shown in Fig. 3. For example, the program modules may be stored in the memory 306. In this case, the integrated circuit 300 may not include the storage device 308.

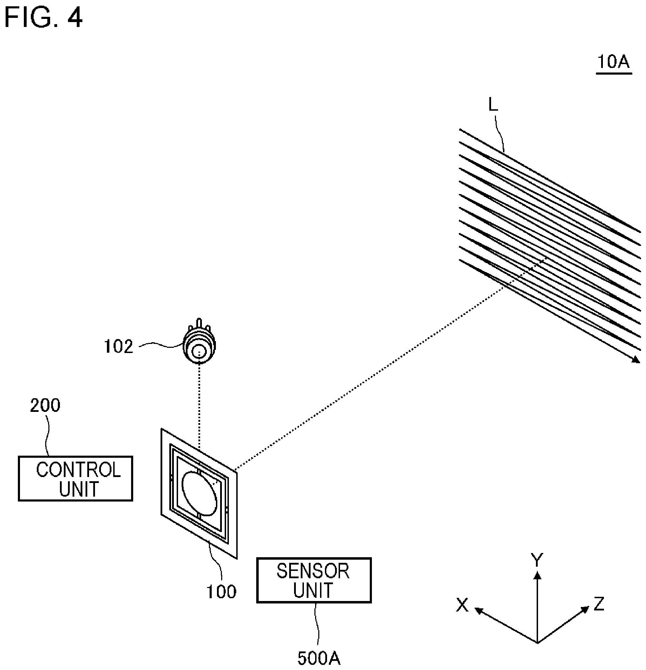

Fig. 4 is a diagram showing a sensor device 10A according to a modification example. The sensor device 10A according to the modification example is the same as the sensor device 10 according to the embodiment except for the following points.

The sensor device 10A further includes a sensor unit 500A. The sensor unit 500A is, for example, an imaging unit such as a camera, or a sensor such as LiDAR. In a case where the FOV of the sensor unit 500A and the FOV obtained by the scanning unit 100 are projected onto the virtual plane perpendicular to the third direction Z, at least a portion of the FOV of the sensor unit 500A overlaps at least a portion of the FOV obtained by the scanning unit 100. Therefore, even in a case where the FOV of the scanning unit 100 becomes narrower than the FOV in the initial state of the scanning unit 100 through the control of the control unit 200, an object present outside the FOV of the scanning unit 100 can be detected, recognized, or identified by the sensor unit 500A.

### Examples

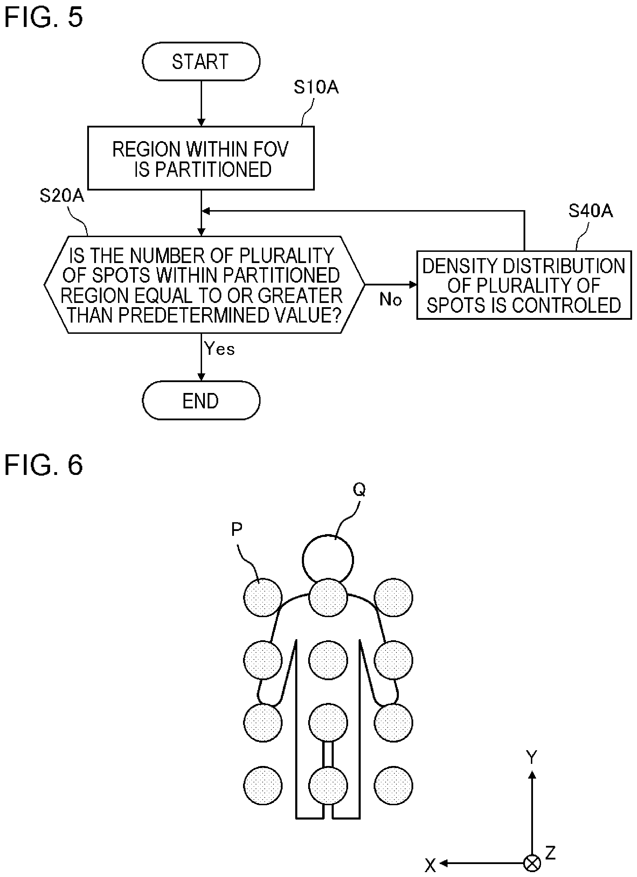

Fig. 5 is a flowchart showing a first example of the control of the control unit 200 according to an example.

First, the control unit 200 partitions at least one region from within the FOV obtained by the scanning unit 100 (partition step S10A). Specifically, in the partition step S10A, the control unit 200 partitions, from other point clouds, point clouds that are relatively close to each other, such as point clouds generated from the plurality of spots emitted to roads, floors, walls, and the like, while excluding unnecessary point clouds for the detection, the recognition, or the identification of the target object, such as a person or an automobile. Hereinafter, a region partitioned from within the FOV obtained by the scanning unit 100 will be referred to as a partitioned region, as necessary. The partitioned region is not limited to a region delimited by a straight line, such as a rectangle and a trapezoid, and may be a region delimited by a free-form curve.

As an example, in a case where a plurality of regions are partitioned from within the FOV in the partition step S10A, the control unit 200 may control the density distribution of a plurality of spots in a region selected according to a predetermined condition, such as a risk level, from among the plurality of regions partitioned from within the FOV, in a determination step S20A and a control step S40A, which will be described below. For example, the control unit 200 controls the density distribution of a plurality of spots in at least one region selected in order of priority from regions with a high risk level to regions with a low risk level, from among the plurality of regions partitioned from within the FOV. In this control, the control unit 200 may control the density distribution of the plurality of spots in all of the plurality of regions selected from within the FOV, or may not control the density distribution of the plurality of spots in all of the plurality of regions selected from within the FOV. For example, in a case where the sensor device 10 is installed in a specific room for security purposes, the control unit 200 determines that regions closer to the entrance of the room have a higher risk level and regions farther away from the entrance have a lower risk level. In this case, the control unit 200 controls the density distribution of a plurality of spots in at least one region selected in order of priority from the regions closer to the entrance of the room to the regions farther away from the entrance of the room, from among the plurality of regions partitioned from within the FOV. Further, for example, in a case where the sensor device 10 is installed in a specific automobile for autonomous driving purposes, the control unit 200 determines that regions closer to the automobile have a higher risk level and regions farther away from the automobile have a lower risk level. In this case, the control unit 200 controls the density distribution of a plurality of spots in at least one region selected in order of priority from the regions closer to the automobile to the regions farther away from the automobile, from among the plurality of regions partitioned from within the FOV.

In an example, in the partition step S10A, the control unit 200 may perform control using a result of calculating a centroid position of the point cloud within the partitioned region.

After the partition step S10A, the control unit 200 determines whether or not the number of the plurality of spots within the partitioned region is equal to or greater than a predetermined value (determination step S20A). The control unit 200 controls the density distribution of the plurality of spots until the number of the plurality of spots within the partitioned region reaches or exceeds the predetermined value (No in the determination step S20A, and the control step S40A). In a case where the number of the plurality of spots within the partitioned region is equal to or greater than the predetermined value (Yes in the determination step S20A), the control unit 200 stops controlling the density distribution of the plurality of spots.

The predetermined value in the determination step S20A is the number of points of a plurality of spots required for detecting, recognizing, or identifying the target object according to the target object. Therefore, in a case where the determination step S20A and the control step S40A are performed, the target object can be detected, recognized, or identified with a higher resolution as compared with a case where the determination step S20A and the control step S40A are not performed.

The predetermined value in the determination step S20A can be set to a value that allows the density distribution of the plurality of spots to be an appropriate distribution, which ensures that the size of the FOV does not become excessively small, the density of the plurality of spots does not become excessively high, or the like, even when the density of the plurality of spots to be emitted to the target object increases. Therefore, in a case where the determination step S20A and the control step S40A are performed, it is possible to control the density distribution of the plurality of spots to an appropriate distribution, which ensures that the size of the FOV does not become excessively small, the density of the plurality of spots does not become excessively high, or the like, as compared with a case where the determination step S20A and the control step S40A are not performed.

The predetermined value in the determination step S20A may be the total number of the plurality of spots within the partitioned region or the number of the plurality of spots in a predetermined direction such as the first direction X and the second direction Y within the partitioned region. For example, in a case where the target object is an object having a longitudinal direction in the second direction Y rather than in the first direction X, such as a person, a very high resolution in the second direction Y may not be required. In this case, the predetermined value in the determination step S20A may be the number of the plurality of spots in the first direction X within the partitioned region. Alternatively, for example, in a case where the target object is an object having a longitudinal direction in the first direction X rather than in the second direction Y, such as an automobile, a very high resolution in the first direction X may not be required. In this case, the predetermined value in the determination step S20A may be the number of the plurality of spots in the second direction Y within the partitioned region.

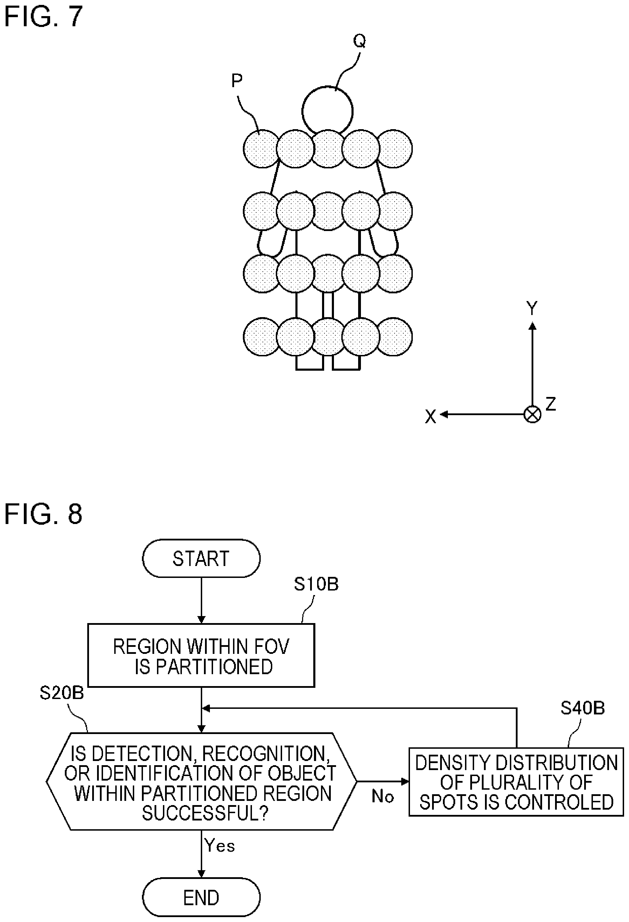

Figs. 6 and 7 are each a diagram illustrating an example of the control shown in Fig. 5.

In Figs. 6 and 7, an X-marked circle indicating the third direction Z indicates that a direction from the foreground to the background of the paper plane is the positive direction of the third direction Z and that a direction from the background to the foreground of the paper plane is the negative direction of the third direction Z.

In Figs. 6 and 7, a target object Q, which is a person, is irradiated with a plurality of spots P by the scanning unit 100. In Fig. 6, the plurality of spots P are arranged in three columns in the first direction X and in four rows in the second direction Y. In Fig. 7, the plurality of spots P are arranged in five columns in the first direction X and in four rows in the second direction Y.

First, as the partition step S10A, in the example shown in Fig. 6, the control unit 200 partitions at least one spot P emitted to the target object Q from at least one spot P not emitted to the target object Q. In the example shown in Fig. 6, at least a portion of one spot P located in the first column from the positive direction side of the first direction X and in the second row from the positive direction side of the second direction Y, at least a portion of each of four spots P located in the second column from the positive direction side of the first direction X and in the first row, the second row, the third row, and the fourth row from the positive direction side of the second direction Y, and at least a portion of one spot P located in the third column from the positive direction side of the first direction X and in the second row from the positive direction side of the second direction Y are emitted to the target object Q. The control unit 200 specifies the partitioned region including these spots P emitted to the target object Q.

Next, as the determination step S20A, the control unit 200 determines whether or not the number of spots P within the partitioned region is equal to or greater than a predetermined value in the example shown in Fig. 6. For example, in a case where the predetermined value in the determination step S20A is the total number of spots P within the partitioned region, the control unit 200 determines whether or not the total number of spots P within the partitioned region, which is six in the example shown in Fig. 6, is equal to or greater than the predetermined value. Alternatively, for example, in a case where the predetermined value in the determination step S20A is the number of spots P in the first direction X within the partitioned region, the control unit 200 determines whether or not the number of spots P in the first direction X within the partitioned region, which is three in the example shown in Fig. 6, is equal to or greater than the predetermined value.

In a case where the control unit 200 determines in the determination step S20A that the number of spots P within the partitioned region in the example shown in Fig. 6 is not equal to or greater than the predetermined value, the control unit 200 controls the number of spots P within the partitioned region to be increased from the state shown in Fig. 6 to the state shown in Fig. 7, as the control step S40A. From the state shown in Fig. 6 to the state shown in Fig. 7, the control unit 200 increases the number of spots P in the first direction X within the partitioned region without changing the number of spots P in the second direction Y within the partitioned region. In the example shown in Fig. 7, at least a portion of one spot P located in the first column from the positive direction side of the first direction X and in the second row from the positive direction side of the second direction Y, at least a portion of each of twelve spots P located in the second column, the third column, and the fourth column from the positive direction side of the first direction X and in the first row, the second row, the third row, and the fourth row from the positive direction side of the second direction Y, and at least a portion of one spot P located in the fifth column from the positive direction side of the first direction X and in the second row from the positive direction side of the second direction Y are emitted to the target object Q.

Next, as the determination step S20A, the control unit 200 determines whether or not the number of spots P within the partitioned region is equal to or greater than the predetermined value in the same manner as in the determination step S20A described using Fig. 6. In the example shown in Fig. 7, in a case where the control unit 200 determines that the number of spots P within the partitioned region is equal to or greater than the predetermined value, the control unit 200 stops controlling the density distribution of the plurality of spots P within the partitioned region.

Next, the sensor device 10 detects, recognizes, or identifies the target object Q using the plurality of spots P with the density distribution shown in Fig. 7.

Fig. 8 is a flowchart showing a second example of the control unit 200 according to the example.

First, the control unit 200 performs a partition step S10B in the same manner as in the partition step S10A of the flowchart shown in Fig. 5.

Next, the control unit 200 determines the success or failure of detection, recognition, or identification of the object using the point cloud generated from the plurality of spots within the partitioned region (determination step S20B). The control unit 200 controls the density distribution of the plurality of spots until successful detection, recognition, or identification of the object is achieved using the point cloud generated from the plurality of spots within the partitioned region (No in the determination step S20B, and a control step S40B). In a case where the successful detection, recognition, or identification of the object using the point cloud generated from the plurality of spots within the partitioned region is achieved (Yes in the determination step S20B), the control unit 200 stops controlling the density distribution of the plurality of spots.

As an example, in a case where the successful detection, recognition, or identification of the object using the point cloud generated from the plurality of spots within the partitioned region is not achieved (No in the determination step S20B), the control unit 200 may stop controlling the density distribution of the plurality of spots. Therefore, after the control of the density distribution of the plurality of spots is stopped, the control unit 200 may return the density distribution of the plurality of spots to the initial density distribution, that is, the density distribution before the control shown in Fig. 8. For example, when the density of at least a portion of the plurality of spots reaches a predetermined upper limit value through the control of the control unit 200, the control unit 200 stops controlling the density distribution of the plurality of spots. Alternatively, for example, when the time for the control unit 200 to perform the determination step S20B and the control step S40B reaches a predetermined upper limit time, the control unit 200 stops controlling the density distribution of the plurality of spots.

In a case where the determination step S20B and the control step S40B are performed, the density of the plurality of spots to be emitted to the target object is increased until the successful detection, recognition, or identification of the object within the partitioned region is achieved. The success or failure of detection, recognition, or identification of the target object is determined, for example, by performing recognition processing, such as machine learning, on point clouds generated using reflected beams from the plurality of spots emitted to the target object. Alternatively, for example, there are cases where, from a relationship between the size of the object to be detected, recognized, or identified and the distance from the scanning unit 100 to the centroid position of the plurality of spots within the partitioned region, it is determined in advance, based on the result of machine learning or the like, which angle pitch should the plurality of beams to be emitted from the scanning unit 100 to the plurality of spots within the partitioned region be set to in order to achieve successful detection, recognition, or identification of the object within the partitioned region. In this case, the control unit 200 can control the angle pitch of the plurality of beams to be emitted from the scanning unit 100 to the plurality of spots within the partitioned region to a pitch for successful detection, recognition, or identification of the object within the partitioned region.

In a case where the determination step S20B and the control step S40B are performed, it is possible to stop the increase in density of the plurality of spots before the density distribution of the plurality of spots deviates from the appropriate distribution, such as the excessively small size of the FOV, the excessively high density of the plurality of spots, or the like. Therefore, in a case where the determination step S20B and the control step S40B are performed, it is possible to control the density distribution of the plurality of spots to an appropriate distribution, which ensures that the size of the FOV does not become excessively small, the density of the plurality of spots does not become excessively high, or the like, as compared with a case where the determination step S20B and the control step S40B are not performed.

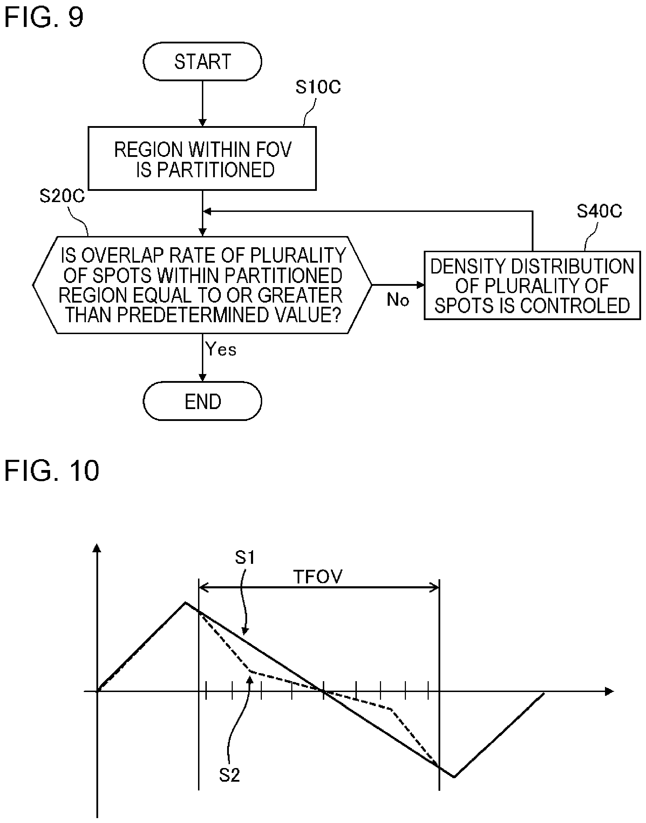

Fig. 9 is a flowchart showing a third example of the control of the control unit 200 according to the example.

First, the control unit 200 performs a partition step S10C in the same manner as in the partition step S10A of the flowchart shown in Fig. 5.

Next, the control unit 200 determines whether or not the overlap rate of the plurality of spots within the partitioned region is equal to or greater than a predetermined value (determination step S20C). The control unit 200 controls the density distribution of the plurality of spots until the overlap rate of the plurality of spots within the partitioned region reaches or exceeds the predetermined value (No in the determination step S20C, and a control step S40C). For example, in a case where the density of the plurality of spots is increased as shown in Fig. 7, adjacent spots among the plurality of spots may at least partially overlap each other. The overlap rate of the plurality of spots for a first spot and a second spot that at least partially overlap each other is obtained as a ratio of the sum of the area of the overlapping portion of the first spot on the second spot and the area of the overlapping portion of the second spot on the first spot with respect to the sum of the area of the first spot and the area of the second spot. In a case where the overlap rate of the plurality of spots within the partitioned region reaches or exceeds the predetermined value (Yes in the determination step S20C), the control unit 200 stops controlling the density distribution of the plurality of spots.

The predetermined value in the determination step S20C is an overlap rate of a plurality of spots that does not cause any inconvenience in detecting, recognizing, or identifying the target object according to the target object. Therefore, in a case where the determination step S20C and the control step S40C are performed, the target object can be detected, recognized, or identified with a higher resolution as compared with a case where the determination step S20C and the control step S40C are not performed.

The predetermined value in the determination step S20C can be set to a value that allows the density distribution of the plurality of spots to be an appropriate distribution, which ensures that the size of the FOV does not become excessively small, the density of the plurality of spots does not become excessively high, or the like, even when the density of the plurality of spots to be emitted to the target object increases. Even when the overlap rate of the plurality of spots is greater than the predetermined value, the resolution is not substantially improved. Furthermore, when the overlap rate of the plurality of spots is greater than the predetermined value, there may be an increased probability of false detection, false recognition, or false identification of the object. Therefore, in a case where the determination step S20C and the control step S40C are performed, it is possible to control the density distribution of the plurality of spots to an appropriate distribution, which ensures that the size of the FOV does not become excessively small, the density of the plurality of spots does not become excessively high, or the like, as compared with a case where the determination step S20C and the control step S40C are not performed.

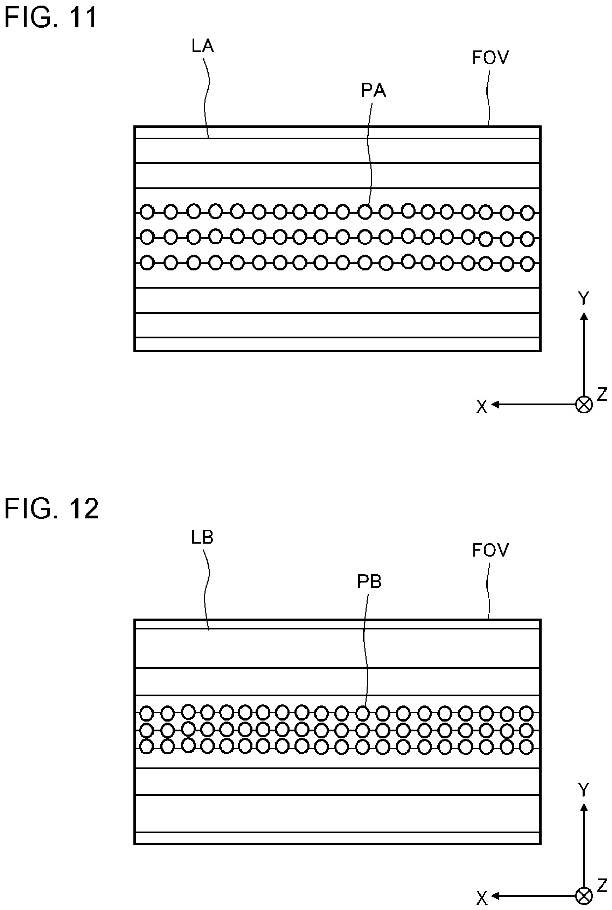

Fig. 10 is a graph illustrating an example of a first drive signal S1 and a second drive signal S2 for performing scanning in the second direction Y with a beam emitted from the light source 110. Fig. 11 is a diagram showing an example of a plurality of spots in a case where the scanning unit 100 is driven using the first drive signal S1 shown in Fig. 10. Fig. 12 is a diagram showing an example of a plurality of spots in a case where the scanning unit 100 is driven using the second drive signal S2 shown in Fig. 10.

In Fig. 10, the horizontal axis of the graph indicates time. The vertical axis of the graph indicates the intensity of the drive signal. In this graph, the upward direction of the vertical axis represents the positive drive signal, and the downward direction of the vertical axis represents the negative drive signal. In Fig. 10, a scanning time section TFOV from the time slightly after the time when the first drive signal S1 reaches a maximum value to the time slightly before the time when the first drive signal S1 reaches a minimum value after the maximum value indicates a time section during which the plurality of beams are repeatedly emitted from the light source 110 toward the scanning unit 100, that is, a measurement time section.

Figs. 11 and 12 each show the FOV projected onto the virtual plane perpendicular to the third direction Z. Fig. 11 shows a plurality of first scanning lines LA arranged in the second direction Y within the FOV. At least one spot is emitted to each of the plurality of first scanning lines LA within the FOV. In Fig. 11, for the explanatory purpose, spots PA emitted along three first scanning lines LA in the central portion within the FOV are indicated by white circles. Fig. 12 shows a plurality of second scanning lines LB arranged in the second direction Y within the FOV. At least one spot is emitted to each of the plurality of second scanning lines LB within the FOV. In Fig. 12, for the explanatory purpose, spots PB emitted along three second scanning lines LB in the central portion within the FOV are indicated by white circles.

As shown in Fig. 10, the first drive signal S1 has a triangular waveform. The first drive signal S1 has a uniform slope in the scanning time section TFOV. In the FOV shown in Fig. 11, the scanning unit 100 performs scanning from the positive direction side of the second direction Y toward the negative direction side of the second direction Y with the plurality of beams repeatedly emitted from the light source 110, during the scanning time section TFOV from the start to the end. Since the slope of the first drive signal S1 in the scanning time section TFOV is uniform, the plurality of first scanning lines LA are arranged at regular intervals in the second direction Y in the FOV shown in Fig. 11.

As shown in Fig. 10, the second drive signal S2 has a modified triangular waveform. Specifically, the slope of the second drive signal S2 in the central section of the scanning time section TFOV is smaller than the slope of the first drive signal S1 in the scanning time section TFOV. In addition, the slope of the second drive signal S2 in both-side sections of the central section within the scanning time section TFOV is greater than the slope of the first drive signal S1 in the scanning time section TFOV. In the FOV shown in Fig. 12, the scanning unit 100 performs scanning from the positive direction side toward the negative direction side of the second direction Y with the plurality of beams repeatedly emitted from the light source 110 shown in Fig. 1 or 4, during the scanning time section TFOV from the start to the end. Since the slope of the second drive signal S2 in the central section of the scanning time section TFOV is smaller than the slope of the first drive signal S1 in the scanning time section TFOV, the interval in the second direction Y between the plurality of second scanning lines LB in the central portion of the FOV shown in Fig. 12 is narrower than the interval in the second direction Y between the plurality of first scanning lines LA of the FOV shown in Fig. 11. In addition, since the slope of the second drive signal S2 in both-side sections of the central section within the scanning time section TFOV is larger than the slope of the first drive signal S1 in the scanning time section TFOV, the interval in the second direction Y between the plurality of second scanning lines LB in both upper and lower portions within the FOV shown in Fig. 12 is wider than the interval in the second direction Y between the plurality of first scanning lines LA of the FOV shown in Fig. 11.

As shown in Fig. 12, the control unit 200 makes the density distribution of the plurality of spots in the central portion in the second direction Y within the FOV different from the density distribution of the plurality of spots in both-side portions of the central portion in the second direction Y within the FOV. The control of the density distribution of the plurality of spots performed by the control unit 200 is not limited to the example shown in Fig. 12. Narrowing the interval in the second direction Y between the plurality of second scanning lines LB shown in Fig. 12, as compared with the interval in the second direction Y between the plurality of first scanning lines LA shown in Fig. 11, in any portion in the second direction Y within the FOV is determined based on in which time section in the scanning time section TFOV the slope of the second drive signal S2 is made smaller than the slope of the first drive signal S1. Therefore, depending on in which time section in the scanning time section TFOV the slope of the second drive signal S2 is made smaller than the slope of the first drive signal S1, the control unit 200 can make the density distribution of the plurality of spots in a portion of the FOV different from the density distribution of the plurality of spots in another portion of the FOV.

Hitherto, the embodiments, the modification examples, and the examples of the present invention have been described above with reference to the drawings, but these are examples of the present invention, and various configurations other than the above description can be employed.

This application claims priority based on Japanese Patent Application No. 2021-038057 filed on March 10, 2021, the entire disclosure of which is incorporated herein by reference.

### REFERENCE SIGNS LIST

10 sensor device
10A sensor device
100 scanning unit
110 light source
200 control unit
300 integrated circuit
302 bus
304 processor
306 memory
308 storage device
310 input and output interface
312 network interface
500A sensor unit
L scanning line
LA first scanning line
LB second scanning line
P spot
PA spot
PB spot
Q target object
S1 first drive signal
S10A partition step
S10B partition step
S10C partition step
S2 second drive signal
S20 determination step
S20A determination step
S20B determination step
S20C determination step
S40 control step
S40A control step
S40B control step
S40C control step
TFOV scanning time section
X first direction
Y second direction
Z third direction

## Claims

1. A sensor device comprising:
a scanning unit; and
a control unit configured to control a density distribution of a plurality of spots to be emitted by the scanning unit until the plurality of spots to be emitted by the scanning unit satisfy a first predetermined condition.

2. The sensor device according to claim 1,
wherein the control unit is configured to control the density distribution by controlling a scanning speed of the scanning unit.

3. The sensor device according to claim 1 or 2,
wherein the first predetermined condition includes whether or not the number of the plurality of spots within a region partitioned from within a field of view obtained by the scanning unit is equal to or greater than a predetermined value.

4. The sensor device according to claim 3,
wherein the predetermined value is the number of points of the plurality of spots in a predetermined direction within the region.

5. The sensor device according to any one of claims 1 to 4,
wherein the first predetermined condition includes success or failure of detection, recognition, or identification of an object using a point cloud generated from the plurality of spots within a region partitioned from within a field of view obtained by the scanning unit.

6. The sensor device according to any one of claims 1 to 5,
wherein the first predetermined condition includes whether or not an overlap rate of the plurality of spots within a region partitioned from within a field of view obtained through scanning by the scanning unit is equal to or greater than a predetermined value.

7. The sensor device according to any one of claims 1 to 6,
wherein the control unit is configured to control the density distribution of the plurality of spots in a region selected according to a second predetermined condition from among a plurality of regions partitioned from within a field of view obtained by the scanning unit.

8. The sensor device according to claim 7,
wherein the second predetermined condition includes a risk level of each of the plurality of regions.

9. The sensor device according to any one of claims 1 to 8,
wherein the control unit is configured to assign an identifier to an object detected, recognized, or identified using a point cloud generated from the plurality of spots.

10. The sensor device according to any one of claims 1 to 9, further comprising:
a sensor unit whose field of view at least partially overlaps at least a portion of a field of view obtained by the scanning unit.

11. The sensor device according to any one of claims 1 to 10,
wherein the control unit is configured to stop controlling the density distribution in a case where the plurality of spots do not satisfy the first predetermined condition.

12. The sensor device according to any one of claims 1 to 11,
wherein the control unit is configured to stop controlling the density distribution in a case where an object detected, recognized, or identified using a point cloud generated from the plurality of spots within a region partitioned from within a field of view obtained by the scanning unit remains stationary for a predetermined time or longer.

13. The sensor device according to any one of claims 1 to 12,
wherein a rate of density change of the plurality of spots controlled by the control unit varies depending on directions of the plurality of spots.

14. The sensor device according to any one of claims 1 to 13,
wherein the control unit is configured to make the density distribution of the plurality of spots in a portion of a field of view obtained by the scanning unit different from the density distribution of the plurality of spots in another portion of the field of view.

15. A control device comprising:
a control unit configured to control a density distribution of a plurality of spots to be emitted by a scanning unit until the plurality of spots to be emitted by the scanning unit satisfy a first predetermined condition.

16. A control method comprising:
causing a computer to control a density distribution of a plurality of spots to be emitted by a scanning unit until the plurality of spots to be emitted by the scanning unit satisfy a first predetermined condition.

17. A program causing a computer to have:
a function of controlling a density distribution of a plurality of spots to be emitted through scanning by a scanning unit until the plurality of spots to be emitted by the scanning unit satisfy a first predetermined condition.

18. A storage medium storing the program according to claim 17.
